# EUROPÄISCHE PATENTANMELDUNG

(11) **EP 1 715 303 A1**
(43) Veröffentlichungstag der Anmeldung: **25.10.2006**
(21) Anmeldenummer: 06007640.3
(22) Anmeldetag: 12.04.2006
(51) Int. Cl.: G01F 15/18, G01F 1/84, G01F 1/32, G01F 1/56, F16L 21/06

(54) **Flanschloses Durchflussmessgerät**

(30) Priorität: 22.04.2005 DE 102005018841
(71) Anmelder: ABB PATENT GmbH, 68526 Ladenburg (DE)
(72) Erfinder: Pohl, Uwe, 37170 Uslar (DE); Mecke, Uwe, 37154 Northeim (DE); Schwiderski, Hans-Werner, Dipl.-Ing., 37176 Nörten-Hardenberg (DE)
(74) Vertreter: Schmidt, Karl Michael

(57) **Zusammenfassung**

Die Erfindung betrifft ein Durchflussmessgerät mit einem Messrohr in oder an welchem das Messsystem angeordnet ist. Um hierbei das Gerät leichter zu gestalten und eine schnellere Einbaubarkeit zu erzielen, ist vorschlagen, dass das Messrohr (1) flanschlos ist, wobei das Messrohr über beidendig vorgesehene Quetschdichtmanschetten an eine Rohrleitung angeschlossen wird.

## Beschreibung

Die Erfindung betrifft ein Durchflussmessgerät mit einem Messrohr in oder an welchem das Messsystem angeordnet ist, gemäß Oberbegriff des Patentanspruches 1.

Aus dem Stand der Technik sind Durchflussmessgeräte beruhend auf verschiedensten Messeffekten bekannt, bei denen ein Messrohr vorgesehen ist, in oder an welchem das Messsystem angeordnet ist. Das Messrohr wird bestimmungsgemäß in eine Leitung eingesetzt, durch die das zu erfassende Messmedium fließt. Es handelt sich dabei im Allgemeinen um Rohre, beziehungsweise Rohrleitungen in Wasserwerken oder in Produktionsanlagen.

Um das Durchflussmessgerät mit seinem Messrohr dort in das Leitungssystem zu installieren, werden üblicherweise Flanschverbindungen vorgesehen. Daher sind Durchflussmessgeräte bekannter Bauart am Messrohr beidendig mit Flanschen versehen.

Nachteilig ist hierbei, dass die Flansche einen Großteil der Herstellkosten für das Messgerät ausmachen, dass die Flansche den Wesentlichen Anteil am Gewicht haben, und außerdem wird viel Platz bei der Installation benötigt.

Der Erfindung liegt daher die Aufgabe zugrunde ein Durchflussmessgerät dahingehend weiterzubilden, dass die oben dargestellten Nachteile vermieden werden.

Die gestellte Aufgabe ist erfindungsgemäß durch die kennzeichnenden Merkmale des Patentanspruches 1 gelöst.

Weitere vorteilhafte Ausgestaltungen des erfindungsgemäßen Durchflussmessgerätes sind in den abhängigen Ansprüchen dargestellt.

Kern der Erfindung ist daher, das Messrohr des Durchflussmessgerätes flanschlos zu gestalten.

In weiterer vorteilhafter Ausgestaltung ist dabei angegeben, dass das Messrohr über beidendig vorgesehene Quetschdichtmanschetten an die Rohrleitung angeschlossen wird. Bei dieser Alternative kann man auch auf Seiten der kundenseitigen Rohrleitung ebenfalls auf Flansche verzichten, weil die Rohrleitungsenden lediglich beidendig zum Anschluss des Durchflussmessgerätes nur noch jeweils in die Quetschdichtmanschetten eingeschoben werden müssen.

Dabei können in einer besonderen Ausgestaltung die Quetschdichtmanschetten auch schon an den Enden des Messrohres angeformt sein.

In einer weiteren Alternative ist angegeben, dass die beiden Enden des Messrohres stumpf enden, und kundenseitig an die beiden Rohrleitungsenden derjenigen Leitung, in der der Durchfluss bestimmt werden soll, angeschweißt werden.

In den genannten Alternativen sind keine schwergewichtigen Flansche mehr am Messgerät und an den Rohrleitungsenden notwendig. Außerdem ist die Montage insbesondere bei der erstgenannten Alternative extrem schnell. Quetschdichtmanschetten haben bezogen auf ihre Dichtigkeit dieselbe Zuverlässigkeit wie Flanschverbindungen.

In weiterer vorteilhafter Ausgestaltung der Erfindung ist das Durchflussmessgerät ein induktives Durchflussmessgerät (IDM). Bei dieser weit verbreiteten Bauart eines hochpräzisen Durchflussmessgerätes lässt sich diese Art der Verbindung mit der Rohrleitung besonders gut nutzen.

Jedoch lässt sich dies auch für weitere Durchflussmessgeräte wie kapazitive Durchflussmessgeräte, Wirbeldurchflussmessgeräte und Coriolismessgeräte einsetzen.

Die Erfindung ist in einem Ausgestaltungsbeispiel dargestellt.

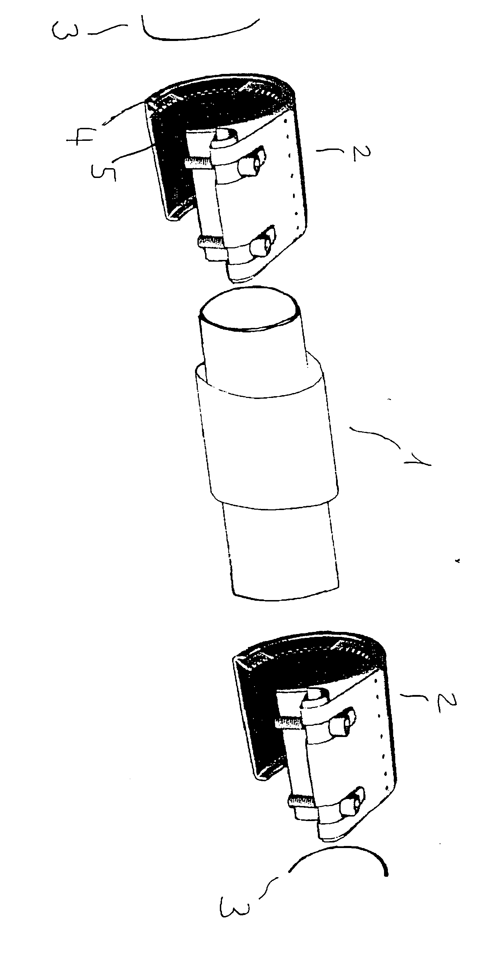

Die Abbildung zeigt zwei so genannte Quetschdichtmanschetten 2 die an den Enden des Messrohres 1 eines Durchflussmessgerätes, deren Details hier aber nicht weiter dargestellt sind, angebracht und dann mit den Enden des Messrohres 1 und den Enden der Rohrleitung 3 verquetscht sind.

Dabei kann das Messrohr entweder nur flanschlos ausgestaltet sein und an den beiden Enden über eine so genannte Quetschdichtmanschette mit der Rohrleitung verbunden werden, oder aber die jeweilige Quetschdichtmanschette 2 ist jeweils bereits an beiden Enden am Messrohr 1 angeordnet, wobei am offenen noch unverquetschten Ende dann das Leitungsrohr eingeschoben und dann verquetscht wird.

In dem Fall, dass die Enden des Messrohres stumpf enden werden die in der Abbildung dargestellten Quetschdichtmanschetten verwendet.

Üblicherweise sind in einer solchen Quetschdichtmanschette beidendig zum Inneren hin einfalzte Kragen 4, die bei Verquetschung die Rohrleitungsenden kraftschlüssig fassen. Eine dahinter angeordnete Dichtlippe 5 beziehungsweise Ringdichtlippe stellt dann eine entsprechend dichte Verbindung her.

In der oben zuvor beschriebenen Alternativen können diese Quetschdichtmanschetten auch bereits schon an den Messrohrenden angeformt sein.

Diese neue Verbindung von Durchflussmessgeräten lässt sich auf alle gängigen Arten von Durchflussmessgeräten anwenden.

## Patentansprüche

1. Durchflussmessgerät mit einem Messrohr in oder an welchem das Messsystem angeordnet ist,
**dadurch gekennzeichnet,**
**dass** das Messrohr (1) flanschlos ist.

2. Durchflussmessgerät nach Anspruch 1
**dadurch gekennzeichnet,**
**dass** das Messrohr (1) beidendig über Quetschdichtmanschetten (2) mit der Rohrleitung (3) verbindbar ist.

3. Durchflussmessgerät nach Anspruch 1
**dadurch gekennzeichnet,**
**dass** am Messrohr (1) beidendig Quetschdichtmanschetten (2) angeordnet oder vormontiert sind.

4. Durchflussmessgerät nach Anspruch 1
**dadurch gekennzeichnet,**
**dass** das Messrohr (1) durch Schweißen mit der Rohrleitung (3) verbindbar ist.

5. Durchflussmessgerät nach einem der vorhergehenden Ansprüche,
**dadurch gekennzeichnet,**
**dass** das Durchflussmessgerät ein induktives Durchflussmessgerät IDM ist.

6. Durchflussmessgerät nach einem der vorhergehenden Ansprüche,
**dadurch gekennzeichnet,**
**dass** das Durchflussmessgerät ein kapazitives Durchflussmessgerät ist.

7. Durchflussmessgerät nach einem der vorhergehenden Ansprüche,
**dadurch gekennzeichnet,**
**dass** das Durchflussmessgerät ein Wirbel-Durchflussmessgerät ist.

8. Durchflussmessgerät nach einem der vorhergehenden Ansprüche,
**dadurch gekennzeichnet,**
**dass** das Durchflussmessgerät ein Coriolis-Durchflussmessgerät ist.
